**Europäisches Patentamt**

**European Patent Office**

**Office européen des brevets**

(19)

(11) Veröffentlichungsnummer: **0 059 363**
**B1**

# (12) EUROPÄISCHE PATENTSCHRIFT

(45) Veröffentlichungstag der Patentschrift:
05.12.84

(21) Anmeldenummer: **82101118.6**

(22) Anmeldetag: **16.02.82**

(51) Int. Cl.³: **A 23 L 1/237**

(54) **Salzgemisch, Verfahren zu seiner Herstellung und Verwendung.**

(30) Priorität: **28.02.81 DE 3107800**

(43) Veröffentlichungstag der Anmeldung:
**08.09.82 Patentblatt 82/36**

(45) Bekanntmachung des Hinweises auf die Patenterteilung:
**05.12.84 Patentblatt 84/49**

(84) Benannte Vertragsstaaten:
**AT BE CH DE FR GB IT LI NL SE**

(56) Entgegenhaltungen:
**FR - A - 1 159 060**
**GB - A - 1 275 540**
**US - A - 4 243 691**

**RESEARCH DISCLOSURE, Nr. 207, Juli 1981, Havant Hampshire, England Referat Nr. 20729 "Sodium-Free Salt Substitute" Seiten 262 und 263**

(73) Patentinhaber: **Merck Patent Gesellschaft mit beschränkter Haftung, Frankfurter Strasse 250, D-6100 Darmstadt (DE)**

(72) Erfinder: **Möschl, Gernot, Falltorstrasse 20, D-6108 Weiterstadt 2 (DE)**
Erfinder: **Vogel, Roland, Dr., Hebbelstrasse 4, D-6100 Darmstadt-Arheilgen (DE)**
Erfinder: **Härtner, Hartmut, Dr., Mathildenweg 9, D-6109 Mühltal 4 (DE)**

ACTORUM AG

## Beschreibung

Die Erfindung betrifft ein neues zum menschlichen Verzehr bestimmtes Salzgemisch, das insbesondere der Diät von Natriumempfindlichen und Hypertonikern beigemischt werden kann und als Kochsalz-Ersatz geeignet ist.

Die Hypertonie steht in engem Zusammenhang mit einer überhöhten Zufuhr von Natrium, insbesondere in Form von Kochsalz. Eine kochsalzarme Diät könnte deshalb dazu beitragen, den Anstieg der Hypertonieerkrankungen mit ihren Folgen (Myocardinfarkt) zu verringern. Das Kochsalz kann durch ein natriumarmes Diätsalz ersetzt werden. Die bis jetzt im Handel befindlichen Diätsalze haben gegenüber Kochsalz den Nachteil, dass sie seifig, bitter und erheblich weniger intensiv als Kochsalz schmecken. Das gilt insbesondere für die dafür geeigneten Kaliumsalze. Andere Nachteile handelsüblicher Diätsalze bestehen darin, dass sie beim Auflösen, Erwärmen und/oder beim Zusammenbringen mit anderen Stoffen ihren Geschmack verändern. Teilweise beruht das auf pH-Verschiebungen; so steigt der pH beim Kochen verschiedener Grundnahrungsmittel, z.B. Reis oder Teigwaren, an. Bei der Verwendung von hartem Trinkwasser zur Auflösung derartiger Diätsalze können schwerlösliche Phosphate, Citrate, Tartrate usw. ausfallen, wodurch sich ebenfalls der pH und damit der Geschmack ändert.

In der US-A-4 243 691 sind im wesentlichen natriumfreie Salzgemische beschrieben, die etwa 2 bis 6 Gewichtsprozent einer 5'-Nucleotidkomponente, etwa 10 bis 40 Gew.-% einer Kaliumphosphatkomponente, etwa 5 bis 20 Gewichtsprozent einer Zukkerkomponente, etwa 15 bis 50 Gew.-% Kaliumchlorid und etwa 10 bis 40 Gew.-% eines Aminosäuregemischs enthält. Diese Salzgemische sind infolge ihres Kaliumphosphatgehalts hygroskopisch, sie neigen zum Klumpen, wodurch ihre Streufähigkeit herabgesetzt wird, und zum Ausfällen schwerlöslicher Phosphate.

Der Erfindung lag die Aufgabe zugrunde ein Salzgemisch, insbesondere ein natriumarmes Diätsalz, auf der Basis physiologisch unbedenklicher Kaliumsalze aufzufinden, das diese Nachteile nicht oder nur in geringerem Masse zeigt. Diese Aufgabe wurde durch die Bereitstellung des nachstehend beschriebenen Salzgemisches gelöst.

Es wurde überraschend gefunden, dass ein Gemisch, enthaltend 0 bis 50% (alle Prozentangaben sind Gewichtsprozent) Natriumchlorid, 22,5 bis 85% Kaliumchlorid, 0 bis 35% Kaliumsulfat, 1 bis 8% Glutamat, 0,1 bis 1% eines Nucleotids und 4 bis 30% eines Zuckers oder Zuckeraustauschstoffs, die Nachteile der bekannten Diätsalze nicht aufweist und einen dem Kochsalz sehr ähnlichen salzigen Geschmack zeigt. Die geschmacklichen Vorteile bleiben überraschenderweise auch beim Kochen erhalten.

Gegenstand der Erfindung ist dementsprechend ein zum menschlichen Verzehr bestimmtes Salzgemisch, enthaltend 0 bis 50% Natriumchlorid, 22,5 bis 85% Kaliumchlorid, 0 bis 35% Kaliumsulfat, 1 bis 8% Glutamat, 0,1 bis 1% Nucleotide und 4 bis 30% Zucker oder Zuckeraustauschstoffe.

Gegenstand der Erfindung ist insbesondere ein natriumarmes Salzgemisch, enthaltend 45 bis 85% Kaliumchlorid, 0 bis 35% Kaliumsulfat, 2 bis 8% Glutamat, 0,2 bis 1% Nucleotide und 8 bis 30% Zucker oder Zuckeraustauschstoffe.

Gegenstand der Erfindung ist ferner die Verwendung eines dieser Gemische als Diätsalz, insbesondere als Kochsalz-Ersatz.

Als Glutamate sind Kaliumglutamat und die freie Glutaminsäure bevorzugt. Geeignet sind aber auch Natrium-, Calcium- und Magnesium-glutamat.

Bevorzugte Nucleotide sind Kaliumguanylylat, Kaliumionisat, Kaliumadenosinat, Guanylsäure, Inosinsäure, Adenosinsäure; geeignet sind auch die entsprechenden Natrium-, Calcium- und Magnesiumsalze.

Bevorzugte Zucker sind Disaccharide wie Saccharose, Lactose, Maltose, oder Monosaccharide wie Glucose, Fructose. Auch Gemische, z.B. der handelsübliche Stärkezucker, können verwendet werden. Bevorzugte Zuckeraustauschstoffe sind Zukkeralkohole wie Glycerin, Sorbit, Mannit, Xylit, ferner Süssstoffe wie Saccharin und Cyclamat sowie deren Salze, z.B. Natriumsaccharinat, Kaliumsaccharinat, Natriumcyclamat.

Die Mengenverhältnisse der Bestandteile des neuen Salzgemisches können innerhalb der angegebenen Grenzen variiert werden. Bevorzugt sind jedoch Gemische, deren wässerige Lösungen pH-Werte zwischen etwa 5,5 und 7,5 aufweisen.

Ferner sind Gemische bevorzugt, die kein Natriumchlorid enthalten und in denen die Anteile an Kaliumchlorid und Kaliumsulfat zusammen zwischen etwa 67 und 81, vorzugsweise zwischen 75 und 80% liegen.

Weiterhin bevorzugte Gemische enthalten Glutamat und Nucleotide in Mengenverhältnissen zwischen etwa 5 : 1 und 15 : 1; der Nucleotid-Anteil liegt darin wesentlich höher als in üblichen Spezialwürzen, die diese beiden Bestandteile ebenfalls enthalten.

Bevorzugt sind im einzelnen Gemische, die 60 bis 85, insbesondere 70 bis 85% Kaliumchlorid, 0 bis 15% Kaliumsulfat, 4 bis 7,5% Glutamat, 0,15 bis 0,5% Nucleotide und 8 bis 25% Zucker oder Zuckeraustauschstoffe enthalten. Diese bevorzugten Gemische können als Diätsalze, insbesondere natriumarme Diätsalze verwendet werden. Andererseits können sie mit Natriumchlorid verschnitten werden.

Das erfindungsgemässe Salzgemisch kann auch weitere Bestandteile enthalten, z.B. weitere Kaliumsalze wie Dikaliumadipat, Trikaliumcitrat, Kaliumsuccinat, Mono- und Dikaliumphosphat, Kaliumhydrogencarbonat, Kaliumlactat, Dikaliumtartrat; ferner Calcium- und/oder Magnesiumsalze wie die entsprechenden Adipate, Succinate, Carbonate, Hydrogencarbonate, Lactate, Chloride, Tartrate, Citrate, Phosphate; Adipinsäure; die Cholinsalze der Essigsäure, Kohlensäure, Milchsäure, Salzsäure, Weinsäure und/oder Citronensäure. Ausserdem kann es Vitamine, z.B. Ascorbinsäure und/oder Kaliumascorbat enthalten, weiterhin Salze von Spurenelementen, z.B. die Sulfate oder Gluconate von Eisen, Kupfer, Mangan, Zink, Kobalt; Jodide wie Kaliumjodid; Fluoride wie Kaliumfluorid; Molybdate wie Kaliummolybdat; Nitrite wie Kaliumnitrit; Würz- und Aromastoffe, z.B. Maltol, Hefeautolysat, Kräutergewürze; feinverteilte Kieselsäure, Konservierungsmittel wie Sorbinsäure.

Besonders bevorzugt sind Gemische, die 70 bis 85% Kaliumchlorid, 0 bis 8% Kaliumsulfat, 3 bis 4,5% Kaliumglutamat, 0 bis 3% Glutaminsäure, 0,15 bis 0,4% Nucleotide in Form von Guanylsäure, deren Salzen und/oder Kaliuminosinat, 8 bis 25% Sorbit und etwa 1% feinverteilte Kieselsäure enthalten.

Vor der beabsichtigten Verwendung des Salzgemisches ist es zweckmässig, die Bestandteile gut zu mischen, z.B. durch Vermahlung. Falls erwünscht, können sich übliche Kompaktierungen und/oder Granulierungen anschliessen. Ein besonders homogenes Produkt mit besonders guten Geschmackseigenschaften ist dadurch erhältlich, dass man eine wässerige Lösung oder Suspension der Komponenten einer Sprühtrocknung unterwirft. Verwendet man einen Kristallbrei der Komponenten zur Sprühtrocknung oder zur Vakuumtrocknung in Mischapparaten, so kann man ein homogenes grobkörniges Kristallisat erhalten, das im Aussehen und Geschmack dem Kochsalz ähnlich ist.

Ausser dem gewünschten salzigen Geschmack zeigt das neue Salzgemisch eine Reihe von weiteren Vorteilen. So ist es — sofern es keine zusätzlichen hygroskopischen Bestandteile enthält — nicht hygroskopisch und daher nicht klebend, gut rieselfähig (besonders in kompaktierter, granulierter oder sprühgetrockneter Form) und leicht zu verarbeiten.

Ein weiterer Vorteil besteht in der Kochfestigkeit. Das neue Salzgemisch kann daher gewünschtenfalls den Nahrungsmitteln bereits vor dem Kochen zugesetzt werden. Es ist dadurch breiter anwendbar als andere Diätsalze, deren Geschmack sich beim Kochen verändert.

Das erfindungsgemässe Salzgemisch kann als Kochsalz-Ersatz wie normales Kochsalz verwendet werden, wobei die Dosierung so bemessen werden muss, dass eine Hyperkaliämie vermieden wird.

*Beispiel 1*

*Diätsalz*

Man siebt 76,8 kg Kaliumchlorid, 3,5 kg Kaliumglutamat, 2,4 kg Glutaminsäure, 0,2 kg Kaliumguanylat, 0,2 kg Kaliuminosinat und 16,3 kg Saccharose durch ein 2-mm-Sieb, versetzt das so erhaltene «Rohgemisch» mit 0,6 kg feinverteilter Kieselsäure und mischt 30 Minuten lang in einem Rhönrad-Mischer. Anschliessend wird das Gemisch in einer Perplex-Mühle gemahlen (Sieb· 1 mm). Das Mahlgut wird nochmals eine Stunde im Rhönrad-Mischer gemischt. Man erhält 100 kg eines pulverförmigen Diätsalzes; Siebanalyse: > 0,3 mm : 8%; 0,2 - 0,3 mm : 33%; 0,1 - 0,2 mm : 22%; < 0,1 mm : 37%.

*Beispiel 2*

*Kompaktiertes Diätsalz*

2 kg «Rohgemisch» (erhältlich nach Beispiel 1) werden mittels eins Labor-Kompaktors (Dosierung 1) kompaktiert, anschliessend in einem Labor-Fladenbrecher gebrochen und durch ein Reibsieb 1,25 mm gesiebt. Das Siebgut wird erneut über ein Laborsieb 0,5 mm gesiebt; Siebanalyse: > 0,5 mm : 43%; < 0,5 mm : 57%. Das erhaltene kompaktierte Pulver kann als Diätsalz verwendet werden.

*Beispiel 3*

*Granuliertes Diätsalz*

2 kg «Rohgemisch» (erhältlich nach Beispiel 1) werden mit 140 ml Wasser in einem Kneter angefeuchtet, über ein 0,5-mm-Granuliersieb gegeben und auf einem Band bei 50° getrocknet. Nach erneutem Sieben (0,5-mm-Sieb) erhält man ein Granulat, das als Diätsalz verwendet werden kann.

*Beispiel 4*

*Sprühgetrocknetes Diätsalz*

Man löst 10 kg «Rohgemisch» (erhältlich nach Beispiel 1) in 30 l Wasser, versprüht die Lösung mit Hilfe eines üblichen Sprühtrockners und erhält ein feines homogenes Sprühpulver, das direkt als Diätsalz verwendet werden kann. Der gewünschte salzige Geschmack bleibt auch nach dem Kochen noch erhalten.

*Beispiel 5*

*Diätsalz*

In einem evakuierbaren und heizbaren Turbulent-Mischer mischt man 0,35 kg Kaliumglutamat, 0,24 kg Glutaminsäure, 0,02 kg Kaliumguanylat, 0,02 kg Kaliuminosinat, 1,63 kg Saccharose und 0,06 kg feinverteilte Kieselsäure mit 2 l Wasser unter leichtem Erwärmen. Anschliessend gibt man bei laufendem Mischapparat 7,68 kg Kaliumchlorid langsam kontinuierlich hinzu und trocknet das Produkt durch Verdampfen des Wassers bei vermindertem Druck und mässiger Erwärmung. Man erhält 10 kg eines grobkristallinen Diätsalzes, das im Aussehen und Geschmack dem Kochsalz ähnlich ist.

*Beispiel 6*

*Sprühgetrocknetes Diätsalz*

Man löst 0,5 kg Glutaminsäure in 30 l Wasser und neutralisiert mit Kaliumhydroxid bis pH 5,8. In der so erhaltenen Kaliumglutamatlösung werden 7,6 kg Kaliumchlorid, 1,75 kg Glucose, 0,02 kg Kaliumguanylat und 0,02 kg Kaliuminosinat unter leichtem Erwärmen gelöst. nach Versprühung der Lösung analog Beispiel 4 erhält man ein feines homogenes Sprühpulver, das direkt als Diätsalz verwendet werden kann.

*Beispiel 7*

*Kochsalzreduziertes Speisesalz für diätetische Zwecke*

Analog Beispiel 5 mischt man 0,22 kg Natriumglutamat, 0,15 kg Glutaminsäure, 0,02 kg Natriumguanylat, 0,9 kg Xylit und 0,003 kg Natriumsaccharinat mit 2 l Wasser, gibt 3,33 kg Natriumchlorid und 4,35 kg Kaliumchlorid hinzu und trocknet analog Beispiel 5. Man erhält ein kochsalzreduziertes Speisesalz, das für diätetische Zwecke verwendet werden kann.

*Beispiel 8*

*Mit Rückführung sprühgetrocknetes Diätsalz*

Man verdünnt 12 kg Kalilauge (47%ig) mit 20 kg Wasser. In dieser Mischung werden 0,5 kg Glutaminsäure aufgelöst; dann wird bis pH 5,5   36,5%ige Salzsäure (ca. 10 kg) langsam eingetragen. In der ca. 70-80° heissen Mischung wurden 0,03 kg Guanylsäure, 1 kg Maltose und 0,7 kg Saccharose aufgelöst. Die Lösung wird einer Sprühtrocknung mit kontinuierlicher Rückführung der feinen Kristallfraktionen unterworfen. Dabei entsteht ein grobkörniges gut riesel- und lagerfähiges leicht auflösbares für einen Einsatz anstelle von Kochsalz geeignetes Diätsalz.

Die auf den folgenden Seiten angegebenen Rezepturen können erfindungsgemäss verarbeitet werden, z.B. analog Beispiel 1 bis 8:

| Angaben in Gewichtsprozent | Rezeptur Nr. | | | | | | | | | | | |
|---|---|---|---|---|---|---|---|---|---|---|---|---|
| | 1 | 2 | 3 | 4 | 5 | 6 | 7 | 8 | 9 | 10 | 11 | 12 |
| Natriumchlorid | — | — | — | — | — | — | — | — | — | — | — | — |
| Kaliumchlorid | 61 | 65 | 74,5 | 67 | 70 | 76,5 | 76 | 71 | 50 | 60 | 60 | 77,0 |
| Kaliumsulfat | 18 | 10 | — | — | 8 | — | — | 8 | 30,5 | 15 | 5 | — |
| Kaliumglutamat | — | 4 | 3,7 | 3,5 | 3 | 5 | 4,5 | 2,5 | 4 | 3 | 3,5 | 4 |
| Natriumglutamat | 0,4 | — | 0,3 | — | — | — | — | — | — | — | — | — |
| Glutaminsäure | 3,6 | 2,6 | 2,5 | 3,5 | 3 | 2,5 | 2,5 | 2,5 | 2,5 | 3 | 3 | 2,5 |
| Kaliumguanylat | — | — | — | 0,4 | — | 0,2 | — | 0,3 | 0,5 | 0,25 | 0,3 | — |
| Kaliuminosinat | — | — | — | — | — | — | — | 0,3 | — | 0,25 | — | — |
| Kaliumadenosinat | — | — | — | — | — | — | — | — | — | — | — | 1 |
| Natriumguanylat | 0,2 | 0,2 | 0,25 | — | — | 0,2 | 0,2 | — | — | — | 0,1 | — |
| Natriuminosinat | 0,2 | 0,2 | 0,25 | — | — | — | — | — | — | — | 0,1 | — |
| Guanylsäure | — | — | — | — | 0,4 | — | 0,2 | — | — | — | — | — |
| Saccharose | 16 | 7,5 | 18 | — | 15 | 5 | 16 | 15 | — | — | 18 | 12 |
| Lactose | — | — | — | 25 | — | — | — | — | — | — | — | — |
| Sorbit | — | 10 | — | — | — | 10 | — | — | — | — | — | — |
| Stärkezucker | — | — | — | — | — | — | — | — | — | 10 | — | — |
| Maltose | — | — | — | — | — | — | — | — | 12 | 8 | — | 3 |
| Kaliumcitrat | — | — | — | — | — | — | — | — | — | — | 10 | — |
| fein verteilte Kieselsäure | 0,6 | 0,5 | 0,5 | 0,6 | 0,6 | 0,6 | 0,6 | 0,4 | 0,5 | 0,5 | — | 0,5 |

| Angaben in Gewichtsprozent | Rezeptur Nr. | | | | | | | | | | | |
|---|---|---|---|---|---|---|---|---|---|---|---|---|
| | 13 | 14 | 15 | 16 | 17 | 18 | 19 | 20 | 21 | 22 | 23 | 24 |
| Natriumchlorid | — | 20 | 30 | 50 | 40 | — | 50 | — | 50 | 50 | 20 | — |
| Kaliumchlorid | 77 | 57 | 53 | 36 | 55,9 | 45 | 22,5 | 85 | 25 | 25 | 45 | 77 |
| Kaliumsulfat | — | — | — | — | — | 35 | 17,5 | — | 3,9 | 17,5 | — | — |
| Kaliumglutamat | 3,5 | 3,5 | — | — | — | 5 | — | 2,5 | — | — | — | 3,5 |
| Natriumglutamat | — | — | 1,8 | 1,7 | 2 | — | 1 | — | 1 | 1,5 | 2 | — |
| Glutaminsäure | 2,3 | 2,4 | 1,4 | 1,5 | 1,4 | 3 | 1 | 2 | — | 1,5 | 2 | 2,5 |
| Kaliumguanylat | — | — | — | — | — | 0,5 | — | 0,25 | — | — | — | 0,2 |
| Kaliuminosinat | — | — | — | — | — | 0,5 | — | 0,25 | — | — | — | 0,2 |
| Kaliumadenosinat | — | — | — | — | — | — | — | — | — | — | — | — |
| Natriumguanylat | 0,1 | 0,1 | 0,1 | 0,1 | 0,1 | — | 0,1 | — | 0,05 | 0,15 | 0,2 | — |
| Natriuminosinat | 0,1 | 0,1 | 0,1 | 0,1 | 0,1 | — | 0,1 | — | 0,05 | 0,15 | 0,2 | — |
| Guanylsäure | 0,2 | 0,2 | — | — | — | — | — | — | — | — | — | — |
| Saccharose | 16,2 | — | 10 | — | — | 11 | 7,8 | 9,5 | — | — | — | 16 |
| Lactose | — | — | — | — | — | — | — | — | — | — | 30 | — |
| Sorbit | — | — | — | 9,97 | — | — | — | — | — | — | — | — |
| Stärkezucker | — | 16,2 | — | — | — | — | — | — | 12 | — | — | — |
| Maltose | — | — | — | — | — | — | — | — | 8 | 4 | — | — |
| Na-Saccharinat | — | — | — | 0,03 | 0,08 | — | — | — | — | — | — | — |
| fein verteilte Kieselsäure | 0,6 | 0,5 | 0,6 | 0,6 | 0,42 | — | — | 0,5 | — | 0,2 | 0,6 | 0,6 |

| Angaben in Gewichtsprozent | 25 | 26 | 27 | 28 | 29 | 30 | 31 | 32 | 33 | 34 | 35 | 36 |
|---|---|---|---|---|---|---|---|---|---|---|---|---|
| | | | | | Rezeptur Nr. | | | | | | | |
| Natriumchlorid | — | — | — | — | — | — | — | — | — | 41,3 | — | — |
| Kaliumchlorid | 70,7 | 72,3 | 70,7 | 74,6 | 72,4 | 52,3 | 54,5 | 76 | 71 | 41,3 | 84 | 80 |
| Kaliumglutamat | 3,4 | 4,1 | 3,4 | 1,4 | 5,43 | 7,9 | 2.1 | 1 | 4,45 | — | 4,2 | 4,2 |
| Natriumglutamat | — | — | — | — | — | — | — | 0,7 | — | 3,8 | — | — |
| Glutaminsäure | — | 0,1 | 0,03 | — | 0,07 | — | — | — | — | — | 0,31 | 0,31 |
| Adipinsäure | 0,2 | 0,2 | 0,17 | 0,1 | 0,1 | — | — | — | 0,1 | 0,2 | 0,8 | 0,8 |
| Kaliumguanylat | — | — | 0,35 | — | — | — | — | — | — | — | — | — |
| Kaliuminosinat | — | 0,7 | 0,35 | — | — | — | — | — | — | — | — | — |
| Kaliumadenosinat | — | — | — | — | 1 | — | — | — | — | — | — | — |
| Natriumguanylat | 0,5 | 0,3 | — | 0,3 | — | — | 0,5 | 0,3 | 0,15 | 0,2 | 0,19 | 0,19 |
| Natriuminosinat | — | — | — | 0,3 | — | — | — | — | — | 0,2 | — | — |
| Guanylsäure | — | — | — | — | — | 0,5 | — | — | — | — | — | — |
| Saccharose | — | — | — | — | 14 | — | — | — | — | — | — | — |
| Lactose | — | — | — | — | — | 26,2 | — | — | — | — | — | — |
| Sorbit | 25,2 | 18,9 | — | 14,2 | — | — | 16,9 | 22 | 24,3 | 13 | 9,5 | 9,5 |
| Xylit | — | — | 20 | — | — | — | — | — | — | — | — | — |
| Kaliumcitrat | — | — | — | — | 7 | — | — | — | — | — | — | — |
| Kaliumadipat | — | 3,4 | — | — | — | — | — | — | — | — | — | — |
| Kaliumsuccinat | — | — | 5 | — | — | 13,1 | — | — | — | — | — | — |
| Kaliumlactat | — | — | — | 9,1 | — | — | 26 | — | — | — | — | — |
| Calciumhydrogenphosphat | — | — | — | — | — | — | — | — | — | — | — | 4 |
| fein verteilte Kieselsäure | — | — | — | — | — | — | — | — | — | — | 1 | 1 |

Bei den Rezepturen Nr. 35 und 36 handelt es sich um weitere besonders bevorzugte Ausführungsformen der vorliegenden Erfindung.

Es ist auch möglich, die vorliegenden Gemische, sofern sie keine in Wasser schwer löslichen Substanzen enthalten, in Form einer wässerigen Lösung zu verwenden. Besonders eignen sich die Rezepturen Nr. 25 bis 34 für diesen Zweck. Die Lösungen können hergestellt werden, indem man das Salzgemisch oder, zweckmässiger, seine einzelnen Bestandteile nacheinander in einer möglichst geringen Menge Wasser löst. Je nach den Löslichkeitsverhältnissen der Bestandteile benötigt man etwa 1,5 bis 4, vorzugsweise etwa 2 bis 3 Gewichtsteile Wasser pro Gewichtsteil Salzgemisch; die genaue erforderliche Menge lässt sich im Einzelfall durch einige Versuche leicht bestimmen.

Die Verwendung von Lösungen anstelle der festen Salzgemische bietet einige Anwendungsvorteile, z.B. problemlose Lagerung, da keine Gefahr einer Agglomeration besteht, bessere Homogenität, einfache Verpackbarkeit.

*Beispiel 9*

Ein Gemisch aus 63,2 kg Kaliumchlorid, 2,65 kg Kaliumglutamat, 0,15 kg Adipinsäure, 0,3 kg Kaliumguanylat, 25 kg Glycerin und 8,7 kg Trikaliumcitrat wird in 200 l Wasser gelöst. Die Lösung kann als Diät-Salzlösung verwendet werden.

Die nachstehenden Rezepturen können analog Beispiel 9 zu Diät-Salzlösungen verarbeitet werden.

| Angaben in Gewichtsprozent | 37 | 38 | 39 | 40 |
|---|---|---|---|---|
| | Rezeptur Nr. | | | |
| Kaliumchlorid | 64,3 | 59,2 | 61,7 | 58,6 |
| Kaliumglutamat | 3,05 | 2,3 | 2,35 | 2,5 |
| Kaliumguanylat | 0,15 | 0,28 | 0,29 | 0,1 |
| Kaliuminosinat | 0,15 | — | 0,29 | — |
| Glycerin | 26,0 | 27,3 | 26,4 | 28,0 |
| Adipinsäure | 0,15 | 0,12 | 0,12 | 1,1 |
| Kaliumlactat | — | 10,2 | — | — |
| Dikaliumtartrat | 6,2 | — | — | — |
| Dikaliumadipat | — | — | 8,7 | — |
| Dikaliumsuccinat | — | — | — | 9,7 |
| Cholinhydrogentartrat | — | 0,6 | — | — |
| Sorbinsäure | — | — | 0,15 | — |

**Patentansprüche**

1. Zum menschlichen Verzehr bestimmtes Salzgemisch, enthaltend 0 bis 50 Gewichtsprozent Natriumchlorid, 22,5 bis 85 Gewichtsprozent Kaliumchlorid, 0 bis 35 Gewichtsprozent Kaliumsulfat, 1 bis 8 Gewichtsprozent Glutamat, 0,1 bis 1 Gewichtsprozent Nucleotide und 4 bis 30 Gewichtsprozent Zucker oder Zuckeraustauschstoffe.

2. Salzgemisch nach Anspruch 1, enthaltend 45 bis 85 Gewichtsprozent Kaliumchlorid, 0 bis 35 Gewichtsprozent Kaliumsulfat, 2 bis 8 Gewichtsprozent Glutamat, 0,2 bis 1 Gewichtsprozent Nucleotide und 8 bis 30 Gewichtsprozent Zucker oder Zukkeraustauschstoffe.

3. Verfahren zur Herstellung eines Salzgemisches nach Anspruch 1 oder 2, dadurch gekennzeichnet, dass man eine wässerige Lösung oder Suspension der Komponenten einer Sprühtrocknung unterwirft.

4. Verwendung eines Gemisches nach Anspruch 1 oder 2 als Diätsalz, insbesondere als Kochsalz-Ersatz.


**Revendications**

1. Mélange de sels prévu pour la consommation humaine, contenant 0 à 50% en poids de chlorure de sodium, 22,5 à 85% en poids de chlorure de potassium, 0 à 35% en poids de sulfate de potassium, 1 à 8% en poids de glutamate, 0,1 à 1% en poids de nucléotides et 4 à 30% en poids de sucres ou produits de remplacement des sucres.

2. Mélange de sels selon la revendication 1, contenant 45 à 85% en poids de chlorure de potassium, 0 à 35% en poids de sulfate de potassium, 2 à 8% en poids de glutamate, 0,2 à 1% en poids de nucléotides et 8 à 30% en poids de sucres ou de produits de remplacement des sucres.

3. Procédé de préparation d'un mélange de sels selon la revendication 1 ou 2, caractérisé en ce que l'on soumet une solution ou suspension aqueuse des composants à un séchage par atomisation.

4. Utilisation d'un mélange selon la revendication 1 ou 2 en tant que sel de régime, en particulier en tant que produit de remplacement du sel de cuisine.


**Claims**

1. Salt mixture destined for human consumption, comprising 0 to 50 per cent by weight of sodium chloride, 22.5 to 85 per cent by weight of potassium chloride, 0 to 35 per cent by weight of potassium sulfate, 1 to 8 per cent by weight of glutamate, 0.1 to 1 per cent by weight of nucleotides and 4 to 30 per cent by weight of sugar or sugar substitutes.

2. Salt mixture according to claim 1, comprising 45 to 85 per cent by weight of potassium chloride, 0 to 35 per cent by weight of potassium sulfate, 2 to 8 per cent by weight of glutamate, 0.2 to 1 per cent by weight of nucleotides and 8 to 30 per cent by weight of sugar or sugar substitutes.

3. Process for the manufacture of a salt mixture according to claim 1 or 2, characterized in that one submits an aqueous solution or suspension of the components to spray drying.

4. Use of a mixture according to claim 1 or 2 as diet salt, particularly as kitchen salt substitute.